Europäisches Patentamt

European Patent Office

Office européen des brevets

(19)

(11) Numéro de publication: **0 205 363**
**A1**

(12) **DEMANDE DE BREVET EUROPEEN**

(21) Numéro de dépôt: 86400986.5

(22) Date de dépôt: 07.05.86

(51) Int. Cl.⁴: **G02B 6/44** , G02B 6/24 ,
B65H 54/76

(30) Priorité: **10.05.85 FR 8507136**

(43) Date de publication de la demande:
**17.12.86 Bulletin 86/51**

(84) Etats contractants désignés:
**AT BE CH DE GB IT LI LU NL SE**

(71) Demandeur: **COMPAGNIE GENERALE DE CONSTRUCTIONS TELEPHONIQUES Société Anonyme dite:**
**251, rue de Vaugirard**
**F-75740 Paris Cedex 15(FR)**

(72) Inventeur: **Galas, Albert Robert Charles**
**47, avenue de la Paix**
**F-93150 Le Blanc Mesnil(FR)**
Inventeur: **Milanowski, Michel**
**9, rue des Chardonnerets**
**F-95620 Parmain(FR)**
Inventeur: **L'Hereec, Bernard Kerviziou**
**F-22560 Pleumeur Bodou(FR)**
Inventeur: **Padel, Gilbert Kernasclet**
**F-22700 Louannec(FR)**

(74) Mandataire: **Loraux, Jean-Claude Georges**
**251, rue de Vaugirard**
**F-75740 Paris Cédex 15(FR)**

(54) **Dispositif pour le stockage de fibres optiques.**

(57) L'invention concerne un dispositif pour le stockage de fibres optiques qui permet de constituer - pour chaque fibre-une longueur de réserve mais de façon telle que la réserve propre à chaque fibre soit indépendante et ne puisse pas se mélanger aux autres fibres logées dans le dispositif.

Des intercalaires (3) sont associés à un corps - (2) de manière à constituer chacun une cloison de séparation entre deux fibres voisines. Chaque intercalaire comporte une lèvre (19) qui détermine la limite maximale autorisée à l'expansion de la longueur mise en réserve de la fibre correspondante et un bossage circulaire (18) dont le rayon correspond au rayon minimal admissible par la fibre optique.

L'invention trouve une application dans le domaine des installations du réseau de vidéocommunications.

FIG 1

0 205 363

1a

## Dispositif pour le montage de réglettes de raccordement et la constitution de répartiteurs.

La présente invention concerne un dispositif pour le stockage de fibres optiques et, plus particulièrement, un dispositif permettant de constituer - pour chaque fibre -une longueur de réserve mais de façon telle que la réserve propre à chaque fibre soit indépendante et ne puisse pas se mélanger aux autres fibres logées dans le dispositif.

Le réseau de vidéocommunications fait un large usage des câbles à fibres optiques pour véhiculer ses informations jusqu'aux installations d'usagers dont la desserte terminale ne peut s'effectuer qu'après une distribution appropriée des câbles. Cette distribution s'opère dans des points de répartition où le brassage des fibres se traduit concrètement par leur raccordement à des dispositifs de connexion conçus spécialement pour les fibres optiques. Or, le raccordement des câbles à fibres optiques pose des problèmes qui n'existaient pas avec les câbles à fils métalliques. En effet, ces fibres sont fragiles et cassantes de sorte que, non seulement elles ne doivent jamais être pliées, mais les courbures qu'on leur impose ne doivent jamais être inférieures à un rayon de quelques centimètres. En outre, il convient de conserver en réserve une longueur de fibre suffisante pour permettre d'effectuer les interventions nécessaires et remédier aux éventuelles ruptures de fibres ; en effet, lors des opérations de connexion, on n'est pas à l'abri d'une rupture accidentelle de la fibre -risque qu'actuellement encore il n'est pas possible d'écarter totalement -ce qui entraîne la perte de quelques centimètres de fibre et il en va d'une diminution semblable de longueur de fibre lors des opérations de débranchement-rebranchement d'une connexion optique.

On a donc été amené à concevoir des dispositifs permettant de constituer une réserve de fibre suffisante pour autoriser plusieurs de ces opérations de débranchement-rebranchement, tout en garantissant à la fibre en réserve une courbure qui ne soit jamais inférieure au rayon admissible - de l'ordre de quatre centimètres-en dessous duquel la fibre subirait des modifications de ses caractéristiques.

De tels dispositifs de réserve de fibre optique sont donc utilisés en de nombreux points de répartition du réseau, dans des conditions d'implantation qui peuvent fortement varier selon la nature de ces différents points de répartition.

C'est ainsi que sont constituées des réserves de fibres dans les points de branchement du réseau de distribution, points de branchement dépendant hiérarchiquement d'un centre de distribution et desservant chacun plusieurs des boîtiers de raccordement qui, individuellement, assurent le câblage des équipements -tels que télévision, son haute-fidélité, téléphone-d'une même installation d'usager. Ces points de branchement sont, en conséquence, géographiquement proches des boîtiers de raccordement d'usager de sorte que leur implantation peut différer et se trouver, entre autres, dans des gaines techniques d'immeubles, sur façade ou sur poteau. Si l'on s'en tient à ce dernier exemple d'implantation, on voit que le travail d'intervention des agents n'est pas simple puisqu'il doit s'effectuer au-dessus du sol, à la hauteur du point de branchement. Or, quand on sait la fragilité des fibres optiques, les précautions qu'il convient de prendre dans leur manipulation par rapport aux conducteurs métalliques classiques, on comprend qu'il soit essentiel de faciliter le plus possible ce travail d'intervention sur les fibres optiques.

C'est la raison pour laquelle le dispositif de stockage proposé par l'invention est amovible, c'est-à-dire qu'il peut être dissocié du point de branchement où il est équipé pour être manipulé et utilisé dans les meilleures conditions par l'agent d'intervention, par exemple au sol et à l'abri des intempéries.

Par ailleurs, lorsque les fibres sont peu nombreuses, leurs longueurs respectives mises en réserve dans le dispositif de stockage peuvent s'y trouver toutes ensemble sans que cela pose un problème d'enchevêtrement de fibres au moment oú il faut intervenir sur l'une ou plusieurs d'entre elles. Mais lorsque l'on atteint la desserte maximale d'un point de branchement, c'est-à-dire huit abonnés, on est vite confronté à ce problème d'enchevêtrement des longueurs de fibre en réserve et la manoeuvre d'une fibre parmi les autres s'avère souvent difficile.

Le dispositif de stockage de l'invention pallie un tel inconvénient et permet de stocker chaque longueur de fibre en réserve indépendamment de ses voisines de façon à en faciliter la manipulation lors des opérations de connexion et de déconnexion, l'intervention sur une fibre déterminée n'ayant aucune répercussion sur les autres fibres logées dans le dispositif de stockage.

A cet effet, l'invention prévoit que ce dernier se compose essentiellement d'un corps en matériau thermoplastique servant de logement à des intercalaires jouant chacun le rôle d'une cloison de séparation entre deux fibres voisines, de telle sorte que chaque fibre en réserve se trouve dans un plan qui lui soit propre sans qu'elle puisse se mélanger avec les autres fibres du dispositif de stockage. Des moyens, associés soit à ces intercalaires, soit audit corps garantissent le rayon de courbure minimal imposé et maintiennent la fibre gainée correspondante à l'intérieur de la limite autorisée à l'expansion de sa longueur mise en réserve. Cet ensemble constitue ainsi une cassette qui peut être facilement associée ou dissociée du point de branchement qui la supporte au moyen d'une visserie ou d'un système d'encliquetage appropriés.

Les différents objets et caractéristiques de l'invention ressortiront de la description qui va être faite maintenant, à titre d'exemple non limitatif, en se reportant aux figures annexées qui représentent :

-les figures 1 et 2, des vues en perspective d'un premier exemple de réalisation d'un dispositif de stockage conforme à l'invention ;

-la figure 3, une vue en plan du dispositif de stockage conformément à la figure 1 ;

-la figure 4, une vue de profil correspondant à la figure 3 ;

-la figure 5, une vue de dessus correspondant à la figure 3 ;

-la figure 6, une vue en plan du dispositif de stockage conformément à la figure 2 ;

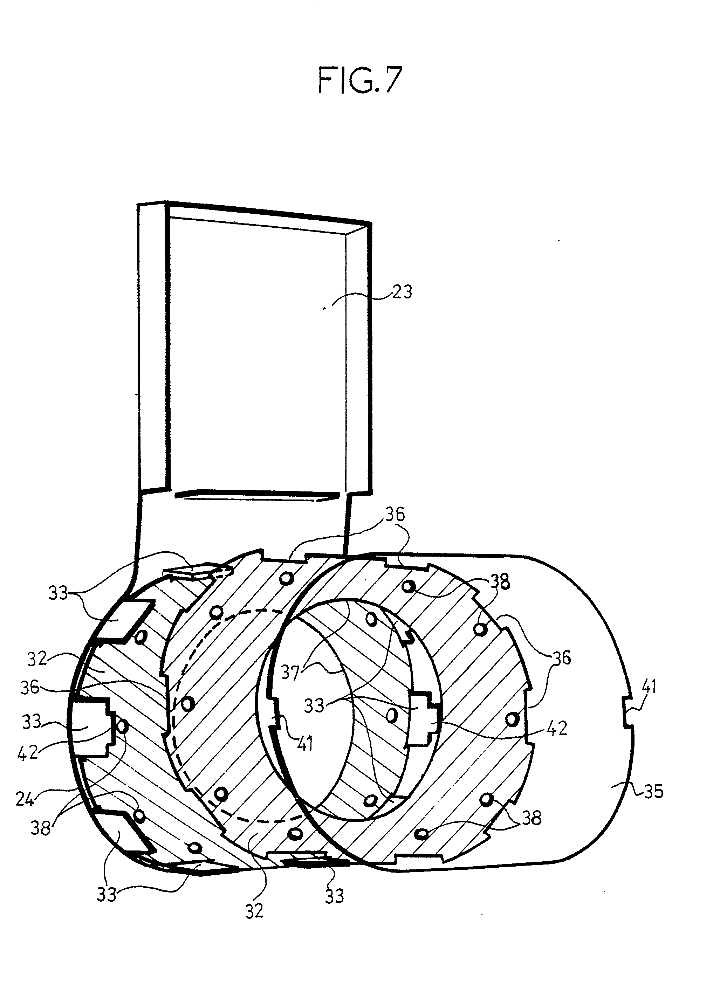

-là figure 7, une vue en perspective d'un second exemple de réalisation d'un dispositif de stockage conforme à l'invention ;

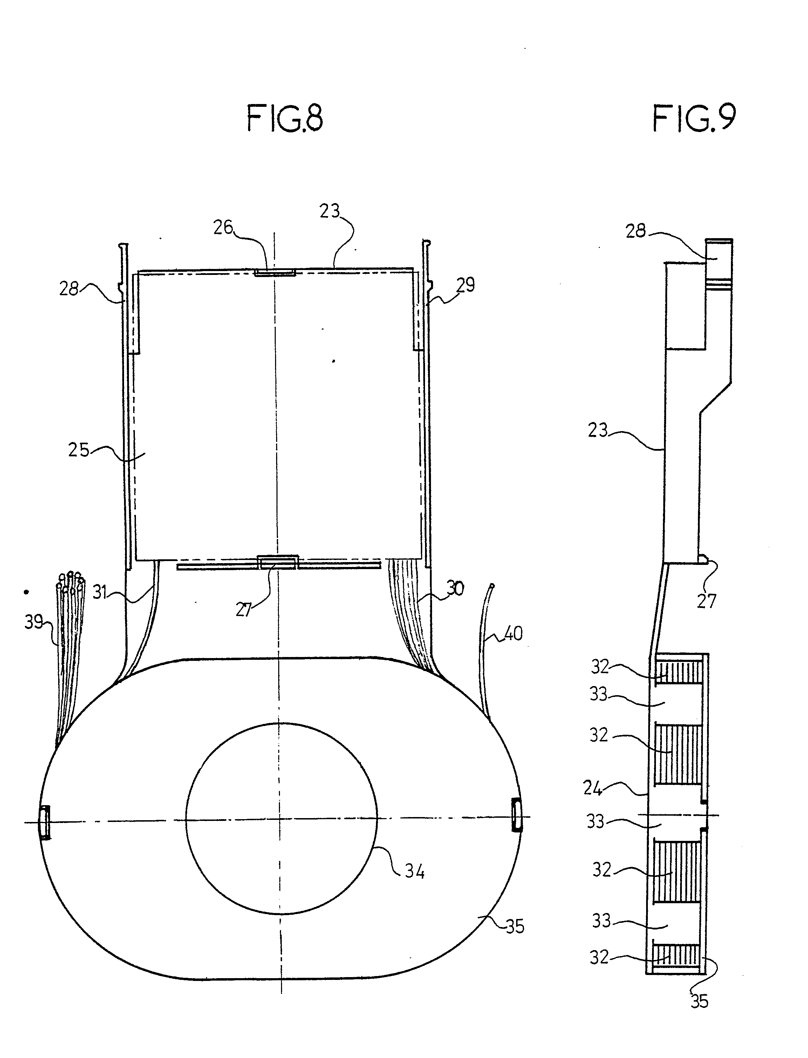

- la figure 8, une vue en plan correspondant à la figure 7 ;

-la figure 9, une vue de profil correspondant à la figure 8.

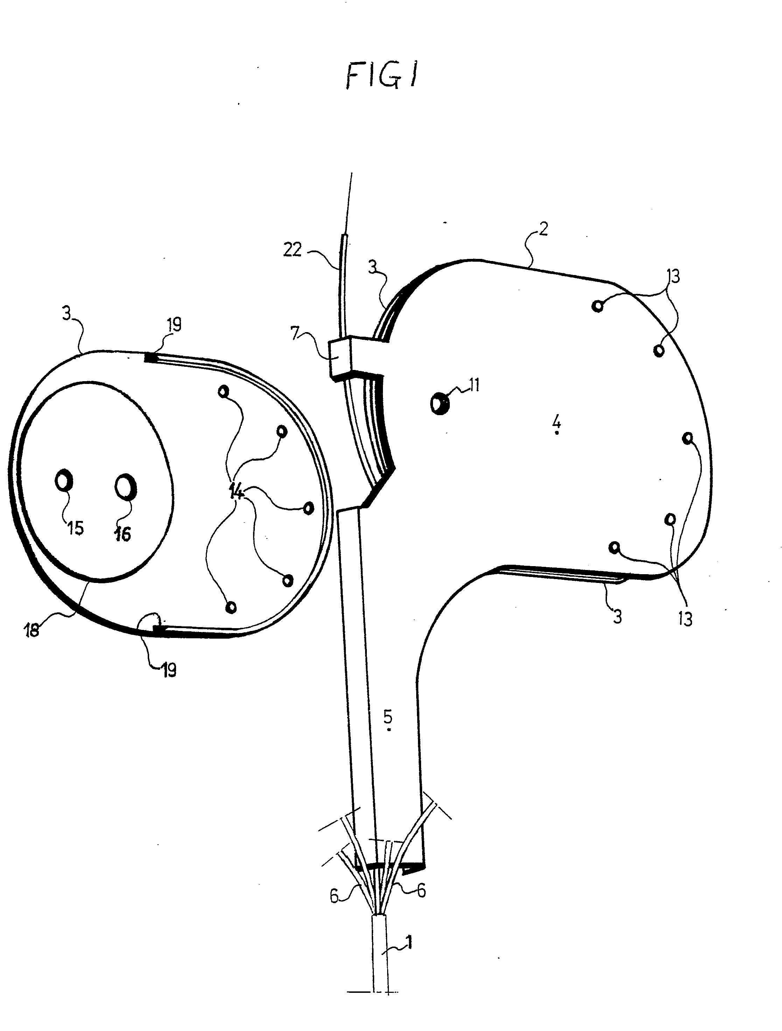

On va commencer la description en se reportant tout d'abord aux figures 1 à 6 qui illustrent un premier exemple de réalisation d'un dispositif de stockage de fibres optiques conforme à l'invention, à savoir un dispositif pour le stockage des longueurs de réserve des fibres du câble de distribution, c'est-à-dire du câble qui, dans le réseau, relie un point de branchement à son centre de distribution.

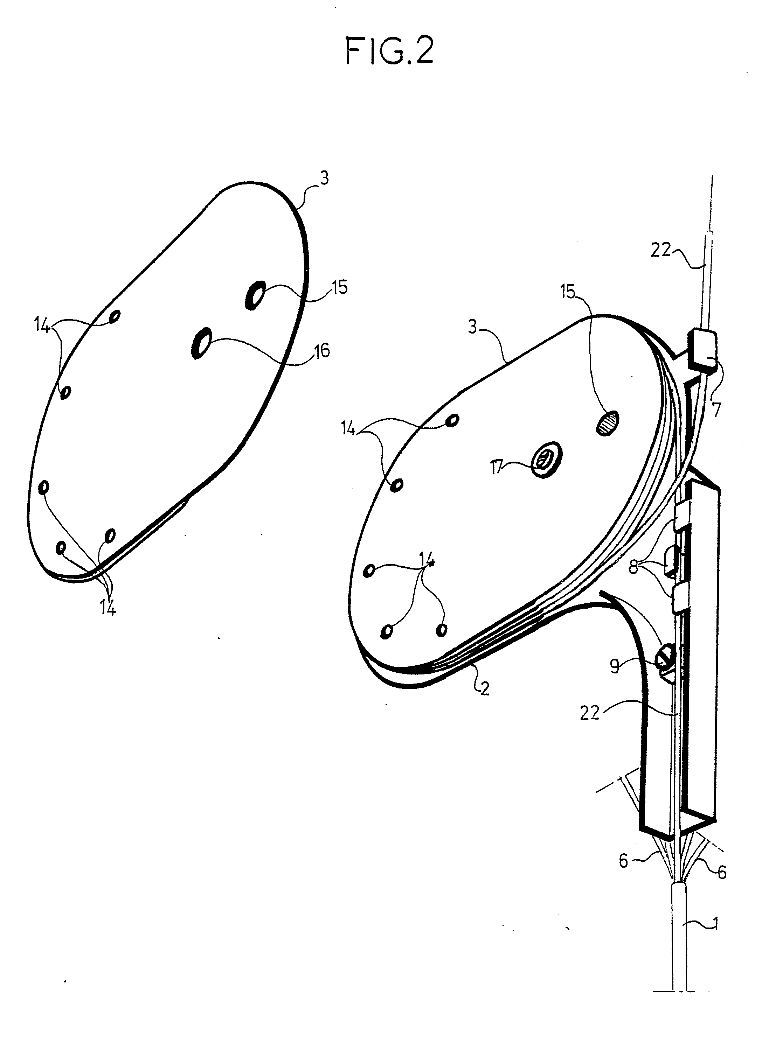

Pour bien comprendre l'intérêt de ce dispositif de stockage, il faut revenir sur ce qui a été évoqué précédemment à propos des conditions dans lesquelles se fait son utilisation et des difficultés que rencontrent les agents dans leur travail d'intervention. C'est la raison pour laquelle le dispositif de stockage est amovible de façon à être facilement manipulable hors du point de branchement qui assure son logement. En effet, en l'occurrence, le travail d'intervention peut consister, entre autres, à raccorder le câble de distribution aux bornes optiques du point de branchement qui desservent les installations d'abonnés. Or, pour ce faire, le câble de distribution 1 (figures 1 et 2) doit être d'abord épanoui afin de libérer ses cinq fibres, quatre d'entre elles assurant la desserte des abonnés, la cinquième servant à l'acheminement des informations transmises par ces mêmes abonnés vers le centre d'exploitation. Puis, pour chacune de ces cinq fibres, une réserve doit être constituée avant que ne se fasse finalement le raccordement optique. On voit donc la facilité de travail que peut procurer au personnel d'intervention un tel dispositif de stockage aussi aisément manipulable.

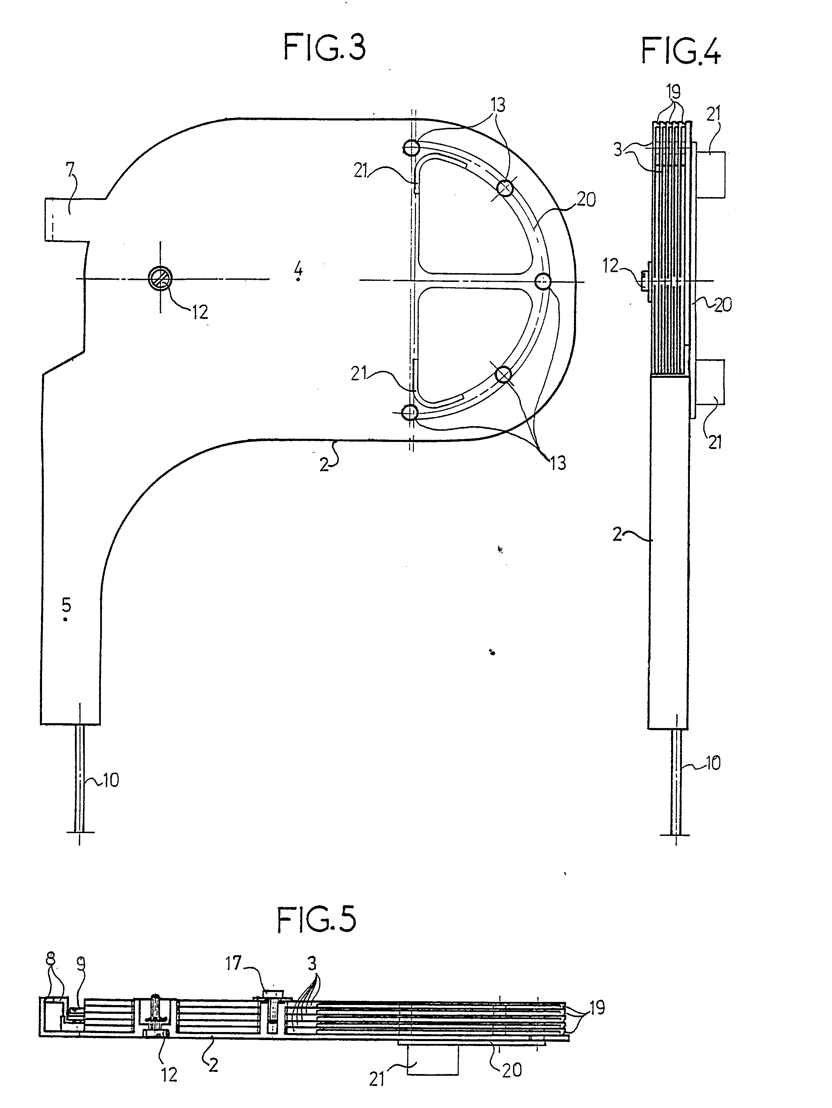

En fait, il est essentiellement constitué par un corps 2 en matériau thermoplastique et par cinq intercalaires 3. Le corps 2 comporte une partie centrale 4 destinée au montage de ces cinq intercalaires, une partie 5 en forme de manche pour protéger les fibres optiques individuelles 6 après leur épanouissement du câble 1 et un ergot 7 pour maintenir ces mêmes fibres après leur passage dans l'intercalaire qui leur est propre. Le manche 5 comprend également des doigts 8 qui retiennent les fibres et leur procurent une position d'alignement ordonné ; une borne à vis 9 permet la fixation d'un conducteur électrique 10 pour la mise à la terre du dispositif de stockage. En outre, la partie centrale 4 présente un certain nombre d'orifices : l'un, portant la référence 11 (figure 1), sert au passage de la vis 12 (figures 3, 4, 5, 6) de fixation du dispositif sur la platine du point de branchement ; les cinq autres orifices 13 assurent le logement des cinq pions du gabarit de lovage dont on verra le rôle ultérieurement.

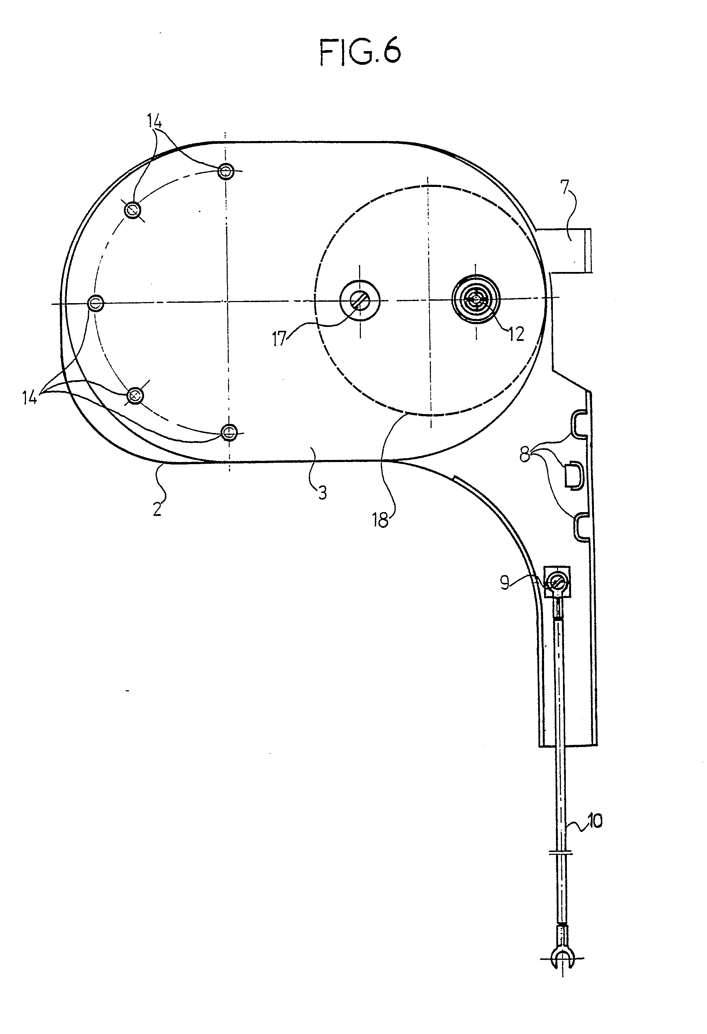

Si l'on examine maintenant les intercalaires 3, on retrouve de façon similaire cinq orifices 14 correspondant exactement aux orifices 13 précédents et l'orifice 15 correspondant à l'orifice 11 pour le passage de la vis 12 ; l'orifice 16 (figures 1 et 2) est destiné au passage de la vis 17 (figures 2, 5, 6) qui fixe les intercalaires 3 sur le corps 2. On remarque également, notamment sur les figures 1 et 6, que chaque intercalaire 3 possède un bossage circulaire 18 dont le rayon correspond au rayon de courbure maximale auquel la fibre peut être soumise ; de même, en se reportant plus particulièrement aux figures 1, 4 et 5, il apparaît que chaque intercalaire 3 dispose, sur une partie de son pourtour, d'une lèvre 19 qui, lorsque les cinq intercalaires sont fixés sur le corps 2 par la vis imperdable 12, appuie contre la face plane de l'intercalaire voisin. On ménage ainsi, entre deux intercalaires adjacents, un espace en relation avec le diamètre d'une fibre gainée pour permettre l'évolution de celle-ci dans cet espace sans difficulté. On peut noter encore que le centrage des divers orifices 13 et 14 se fait automatiquement dès l'instant que les vis 12 et 17 sont en place dans leurs orifices 11-15 et 16 respectifs.

Il existe, de plus, un gabarit 20 plus spécialement visible sur les figures 3, 4 et 5. Ce gabarit, en forme générale de "D", ne fait pas partie du dispositif de stockage ; il lui est adjoint lorsqu'il s'agit de donner aux fibres le lovage ayant le plus grand développement, c'est-à-dire de leur fournir la plus grande longueur de réserve. Dans ce cas, les intercalaires 3 étant fixés sur le corps 2, le gabarit 20 est mis en place au moyen des ailes 21 qui en facilitent la préhension manuelle, les pions de ce gabarit se trouvant ainsi introduits dans les orifices 13 du corps et 14 des intercalaires.

C'est à partir d'une telle situation que l'on va examiner maintenant un exemple d'utilisation d'un tel dispositif de stockage. Les cinq fibres 6 ayant été rendues individuelles par rapport au câble 1, on se bornera à illustrer les manipulations en relation avec la fibre 22 (figures 1 et 2) étant entendu que ce qui la concerne se rapporte également aux autres fibres du câble 1.

La fibre 6-22 est introduite sous les doigts 8 qui la maintiennent correctement en place mais dont l'élasticité en permet le dégagement aisé. Puis, la fibre est glissée entre le corps et l'intercalaire dont il est voisin, ou entre deux intercalaires lorsqu'il s'agira des autres fibres. Lorsqu'elle atteint la partie où l'intercalaire présente la lèvre 19, l'utilisateur éloigne légèrement cette lèvre pour permettre l'introduction de la fibre et, ensuite relâchant cette lèvre, celle-ci reprend élastiquement sa position initiale en appui contre la face du corps ou de l'intercalaire voisin. Après qu'une longueur suffisante de fibre ait été extraite du dispositif de stockage pour en permettre le raccordement sur la borne appropriée, on voit donc que la fibre est engagée entre les pions du gabarit 20 et la lèvre 19 de l'intercalaire concerné. Elle présente ainsi le lovage maximal, c'est-à-dire qu'elle dispose alors de sa plus grande longueur de réserve, par exemple 150 mm. Lorsque les cinq fibres ont été mises en place de cette même façon, le gabarit 20 est retiré; chacune a ainsi sa longueur maximale de réserve et chacune est limitée dans son expansion possible à cause de la présence de la lèvre 19 qui lui correspond. Mais il est à noter que chacune se trouve dans un plan qui lui est propre puisque chaque intercalaire 3 joue le rôle d'une cloison entre deux fibres voisines. Toute intervention ultérieure peut, en conséquence, se faire sur une fibre, indépendamment de ses voisines sans qu'il y ait de possibilité de mélange ou d'enchevêtrement entre elles, ce qui facilite grandement les opérations d'intervention. Au cours de celle-ci, quand une fibre atteint la longueur de réserve minimale, elle se trouve finalement enroulée autour du bossage circulaire 18 qui lui garantit de ne pas avoir un rayon de courbure inférieur au rayon admissible, en l'occurrence 40 mm. On aura remarqué que l'ergot 7 maintient ensemble les fibres issues du dispositif de stockage -telle la fibre 22- dans une même orientation, ce qui facilite le travail d'intervention pour leur raccordement sur leurs bornes optiques respectives.

On va examiner maintenant un autre exemple de réalisation du dispositif de stockage en se reportant aux figures 7, 8, et 9. Si le but recherché dans cet exemple de réalisation reste le même que dans l'exemple précédent -à savoir que chaque fibre dispose d'un logement qui lui soit propre ainsi que de limites de longueurs minimale et maximale de réserve-les moyens utilisés diffèrent car l'utilisation n'est pas la même. Autant, dans ce qui vient d'être décrit, l'accent était mis sur les facilités d'intervention, autant dans ce qui va suivre ces facilités deviennent secondaires étant donné que la mise en place des fibres ne se fait pas sur le site avec les difficultés que cela implique mais en usine avec les moyens appropriés que cela suppose. En effet, le dispositif de stockage des figures 7 à 9 est associé à un système de couplage optique -le coupleur-qui permet à huit fibres optiques d'abonnés d'être reliées ensemble à une seule et même fibre qui, via le câble de distribution, achemine jusqu'au centre d'exploitation les commandes et informations émanant des abonnés. Ce coupleur est, en fait, un boîtier d'où sortent ces huit fibres d'abonnés ainsi que la fibre commune de commande et ce sont ces neuf fibres dont il faut constituer les longueurs de réserve entre le coupleur luimême et les bornes optiques où aboutissent les huit fibres desservant les abonnés et la fibre de commande du câble de distribution. Par ailleurs, par sa situation dans le point de branchement, ce dispositif de stockage devait avoir l'épaisseur la plus faible possible et, bien que ne devant faire l'objet que de rares interventions, il devait pouvoir être facilement amovible. Ce sont ces considérations qui ont amené à la réalisation que l'on va décrire maintenant.

Le dispositif de stockage des figures 7 à 9 est essentiellement constitué par deux parties 23 et 24, la partie supérieure 23 étant destinée au logement du coupleur 25 (figure 8), la partie inférieure 24 servant à constituer les longueurs de fibre en réserve. Si le logement 23 est un peu schématisé sur la figure 7, on peut se reporter aux figures 8 et 9 grâce auxquelles on voit que le coupleur 25 - représenté en ligne pointillée mixte sur la figure 8- est maintenu dans ce logement par des moyens connus d'encliquetage 26 et 27. De plus, des pattes 28 et 29 susceptibles d'être élastiquement déformées permettent le montage -également par encliquetage-du dispositif de stockage dans le coffret du point de branchement.

On va examiner à présent les moyens utilisés pour constituer les longueurs mises en réserve des huit fibres 30 reliant le coupleur aux bornes optiques d'abonnés et de la fibre 31 raccordant le coupleur à la borne optique de la fibre de commande du câble de distribution. Il s'agit essentiellement de huit intercalaires 32 qui jouent chacun le rôle d'une cloison de séparation entre deux fibres voisines, des pattes 33 qui limitent l'expansion possible des fibres en réserve, du noyau cylindrique central 34 (figure 8) -solidaire du fond de la partie 24-qui détermine le rayon minimal de courbure auquel peut être soumise chaque fibre, et du couvercle 35.

Les huit intercalaires 32 sont identiques et comportent sur leur pourtour des encoches 36 - (figure 7) dont le nombre et la position correspondent à ceux des pattes 33 ; chaque patte 33 se loge dans une encoche 36, assurant ainsi la mise en place rapide de l'intercalaire concerné et évitant que, lors des opérations de lovage, la fibre manipulée ne puisse passer par-dessus l'intercalaire adjacent. L'ouverture centrale 37 de chaque intercalaire permet le passage du noyau central 34 - (figure 8). On notera la présence d'orifices 38 sur les intercalaires (figure 7) : comme on l'a vu avec les orifices 13 (figure 3) de l'exemple de réalisation précédent, ces orifices 38 permettent le passage des pions d'un gabarit facilitant le lovage des fibres. Ainsi, on prend une fibre 30 (figure 8), on l'insère entre les pions des orifices 38 et les pattes 33, on lui fait parcourir un tour et demi pour obtenir la longueur de réserve appropriée ; puis elle sort entre deux pattes 33, à l'opposé de son entrée, pour constituer une des fibres du groupe 39 destinées au raccordement sur les bornes optiques desservant les fibres d'abonnés. Dès que le lovage d'une fibre est terminé, on monte un intercalaire 32 et l'on procède de la même façon pour la fibre 30 suivante et ainsi de suite. On notera qu'il en va de même pour la fibre 31 de commande hormis le fait que son lovage s'opère dans le sens inverse et qu'elle sort sur le côté opposé comme l'indique la fibre référencée 40. Quand toutes les fibres sont en place, on retire le gabarit et ses pions des orifices 38 et l'on applique le couvercle 35 sur l'ensemble ; la mise du couvercle en position correcte est facilitée par la présence des encoches 41 (figure 7) dans lesquelles s'engagent les dents 42 des deux encoches 33 tandis que sa fixation sur le noyau 34 peut se faire par des pattes d'encliquetage non représentées sur les figures. Là encore, comme dans l'exemple de réalisation précédent, on peut agir sur une seule des neuf fibres lovées sans que cela perturbe aucunement les autres fibres, la longueur minimale d'une fibre en réserve étant atteinte lorsque cette fibre se trouve enroulée autour du noyau central 34.

On notera que le fait d'avoir adopté un système se présentant sous forme de "cassettes" pour les deux dispositifs de stockage de fibres offre un avantage important au point de vue de l'encombrement par rapport aux systèmes de lovage connus. En effet, leut faible épaisseur permet de les juxtaposer et même de leur adjoindre d'autres éléments tout en restant dans l'épaisseur déterminée par celles du coffret du point de branchement dont les autres dimensions ont pu ainsi être réduites en conséquence.

Il est bien évident que la description qui précède n'a été faite qu'à titre d'exemple non limitatif et que d'autres variantes peuvent être envisagées ·sans sortir pour autant du cadre de l'invention.

**Revendications**

1. Dispositif pour le stockage de fibres optiques caractérisé par le fait qu'il comporte des éléments (3, 32) associés respectivement à chaque fibre optique pour constituer chacun une cloison de séparation entre deux fibres voisines, des moyens (19, 33 et 18, 34) coopérant avec ces éléments pour, d'une part en ce qui concerne les moyens - (19, 33), maintenir chaque fibre optique (22) à l'intérieur de la limite que leur présence autorise à l'expansion de la longueur mise en réserve de chaque fibre et pour, d'autre part en ce qui concerne les moyens (18, 34), déterminer le rayon minimal de courbure auquel peut être soumise chaque fibre, une telle disposition permettant que chaque fibre soit indépendante de ses voisines et puisse évoluer dans un logement qui lui est propre et qui est déterminé par des éléments (3, 32), des moyens (19, 33) et des moyens (18, 34) de façon à pouvoir agir sur chaque fibre sans qu'il y ait mélange ou d'enchevêtrement avec les austres longueurs de fibres de réserve.

2. Dispositif pour le stockage de fibres optiques conforme à la première revendication, caractérisé par le fait que les éléments (3, 32) comportent des orifices (13, 14, 38) pour le logement des pions d'un gabarit (20) qui déterminent le cheminement des lovages des fibres optiques pour obtenir la longueur maximale de fibres en réserve.

3. Dispositif pour le stockage de fibres optiques conforme à la première revendication, caractérisé par le fait que chaque élément (3) comporte, sur une partie de son pourtour, une lèvre - (19) dont l'épaisseur est légèrement supérieure au diamètre de la fibre optique dont elle constitue la limite maximale à son expansion possible et un bossage circulaire (18) dont le rayon correspond au rayon minimal admissible par la fibre.

4. Dispositif pour le stockage de fibres optiques conforme aux première, deuxième et troisième revendications caractérisé par le fait que les éléments (3) sont fixés sur un support (2) comportant, outre les orifices (13) pour le montage du gabarit (20) de lovage des fibres, une partie (5) pour la protection et la fixation d'un câble à plusieurs fibres (1) disposant d'au moins un doigt (8) de retenue des fibres (6) de ce câble (1) avant leur entrée entre les éléments (3), et au moins un autre doigt (7) de maintien des fibres (22) après leur passage entre ces mêmes éléments.

5. Dispositif pour le stockage de fibres optiques conforme à la première revendication, caractérisé par le fait que chaque élément (32) comporte, d'une part, sur son pourtour des encoches - (36) corrrespondant en nombre et en position aux pattes (33) qui constituent la limite maximale à l'expansion posible des fibres de telle sorte que la mise en place des éléments (32) se borne à introduire les pattes (33) dans les encoches (36), d'autre part, dans sa partie centrale une ouverture (37) pour le passage d'un noyau circulaire (34) dont le rayon correspond au rayon minimal admissible par les fibres.

6. Dispositif pour le stockage de fibres optiques conforme à la cinquième revendication, caractérisé par le fait que les éléments (32) sont montés sur un support (23, 24) auquel appartiennent les pattes (33) ainsi que le noyau circulaire (34), un couvercle (35) coopérant par des moyens connus pour maintenir en place les fibres et les éléments (32) tandis que la partie (23) sert au logement d'un dispositif de couplage optique (25) et comporte des pattes élastiques (28, 29) pour le montage et le démontage du dispositif de stockage.

FIG 1

# FIG.2

## FIG.3

## FIG.4

## FIG.5

# FIG.6

# FIG.7

## FIG.8

## FIG.9

## DOCUMENTS CONSIDERES COMME PERTINENTS

| Catégorie | Citation du document avec indication, en cas de besoin. des parties pertinentes | Revendication concernee | CLASSEMENT DE LA DEMANDE (Int. Cl.4) |
|---|---|---|---|
| Y | DE-A-2 914 217  (LICENTIA) <br> * Revendications 1-4; figures * | 1 | G 02 B    6/44 <br> G 02 B    6/24 <br> B 65 H   54/76 |
| A | | 3,4 | |
| | --- | | |
| Y | EP-A-0 101 970  (C.I.T.-ALCATEL) <br> * Revendications; figures 1,7-9 * | 1 | |
| | --- | | |
| A | GB-A-2 074 544  (G.F.C.) <br> * Page 2 * | 2,5,6 | |
| | --- | | |
| A,P | FR-A-2 561 788  (SILEC) <br> * Revendications * | 1 | |
| | --- | | |
| A,P | DE-A-3 413 401  (PHILIPS) <br> * Revendications * | 1 | DOMAINES TECHNIQUES RECHERCHES (Int. Cl.4) |
| | --- | | |
| A,P | DE-A-3 412 159  (G. SCHMIDT) <br> * Résumé * | 1 | G 02 B <br> B 65 H |
| | ----- • | | |

Le présent rapport de recherche a été établi pour toutes les revendications

| Lieu de la recherche | Date d'achèvement de la recherche | Examinateur |
|---|---|---|
| LA HAYE | 19-08-1986 | PFAHLER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82